Europäisches Patentamt

European Patent Office

Office européen des brevets

(19)

(11) Publication number: **0 283 579 B1**

## EUROPEAN PATENT SPECIFICATION

(12)

(45) Date of publication of patent specification: **25.03.92**  (51) Int. Cl.⁵: **G09G 1/16**

(21) Application number: **87118541.9**

(22) Date of filing: **15.12.87**

(54) **Raster scan display system with random access memory character generator.**

(30) Priority: **27.03.87 US 30787**

(43) Date of publication of application:
**28.09.88 Bulletin 88/39**

(45) Publication of the grant of the patent:
**25.03.92 Bulletin 92/13**

(84) Designated Contracting States:
**AT BE CH DE ES FR GB GR IT LI LU NL SE**

(56) References cited:
**EP-A- 0 134 423**
**US-A- 4 595 996**

**IBM TECHNICAL DISCLOSURE BULLETIN, vol. 27, no. 1B, June 1984, pages 868-870, IBM Corp., New York, US; D.A. CANTON: "Alphanumeric display logic"**

**IBM TECHNICAL DISLOSURE BULLETIN, vol. 30, no. 3, August 1987, pages 1034-1036, IBM Corp., Armonk, New York, US; "Vertical window CRT address generator"**

(73) Proprietor: **International Business Machines Corporation**
**Old Orchard Road**
**Armonk, N.Y. 10504(US)**

(72) Inventor: **Trynosky, Stephen Wayne**
**8924 S.W. 6th Street**
**Boca Raton Florida, 33433(US)**
Inventor: **Parsons, Donald Holcombe, Jr.**
**246 Tangier Avenue**
**Palm Beach Florida, 334380(US)**

(74) Representative: **Burt, Roger James, Dr. et al**
**IBM United Kingdom Limited Intellectual Property Department Hursley Park**
**Winchester Hampshire SO21 2JN(GB)**

# Description

The present invention relates to raster scan display systems and in particular to such systems when driven from digital character generators.

Character generation digital display systems are well known. They are normally used to generate alphanumeric characters on raster scan display screens, but have also been used to generate graphics displays by providing so-called graphics characters, which define character-sized line portions at different angles and positions within character boxes.

Many character generator display systems use a read-only memory to develop the font data for display from input character data. This font data represents the bright-up video signals which define the displayed characters. Thus, in a character which extends over eight scan lines, the font data comprises eight sets of digital data, each set representing the configuration of the character over an associated one of the eight scan lines. For each character in the display, the read-only memory is addressed by the character code (e.g. in ASCII form) and a row scan value to access each byte of data (assuming eight bits per scan line). This is repeated, for each line of characters, eight lines, with a different row scan value for each line in the row. Such an arrangement is used in the IBM Monochrome Display and Printer Adapter, details of which can be found in the IBM Technical Reference Manual, Personal Computer, Ref No. 6936895.

In a later display adapter for the IBM Personal Computer, the Enhanced Graphics Adapter, alphanumeric display data is stored in a plane of read/write memory. In this adapter, font planes of such memory are provided. In graphics modes, these planes contain respectively, red, green, blue and intensity bits for the display picture elements. In alphanumeric modes, character data (e.g. ASCII code) is stored in one memory plane, font data in a second of the planes, and attribute data in a third plane. The data from the first of these planes is used to address the second plane to obtain the font data for display. As with the read-only memory scheme, the addresses all include row data from the adapter control system to select the font data for successive scan lines in a character line.

In the IBM Technical Disclosure Bulletin, Vol. 27, No. 1B, June 1984, at pages 868 through 870 there is described another form of alphanumeric display logic. In that system, alphanumeric characters for display are stored in a dynamic random access memory which is coupled to a 256 byte shift register. Data relating to a complete row of characters to be displayed is transferred into the shift register which is clocked to provide successive outputs to address a character generator. The reason for the use of this shift register is that video memories have to be dual ported, that is, they are accessed both by a CPU for data updating and a control system, for example a CRT controller or similar device, to obtain the data for refreshing the display. In the article, the cycle time of the video memory was not sufficiently short to allow normal time multiplexing of the dual ports, and this was resolved by the use of the shift register arrangement which means that, as the display refresh data was transferred to the shift register, this multiplexing was not required.

According to the invention, there is provided a raster scan display system including a random access memory character generator and a dual port random access memory video buffer including memory partitions, output shift register means, and means for transferring data groups from the partitions to the shift register means, characterised in that said memory partitions including a first partition for storing, in consecutive locations, first data pairs, each comprising character data and display font data, said system including control logic means including means for controlling said means for transferring to transfer a plurality of said first data pairs to the shift register means, means for clocking the shift register means to output said first pairs of data, and means for directing the character data of a first pair to address the character generator for writing the font data of the first pair into the addressed location.

An embodiment of the invention will now be described, by way of example, with reference to the accompanying drawings, in which:

Figure 1 is a block diagram of a prior art alphanumeric display adapter;

Figure 2 is a block diagram of a display adapter coupled to a CPU and a raster display device embodying the present invention;

Figure 3 shows the layout of the video buffer memory shown in Figure 2;

Figure 4 is a timing diagram showing the timings of character generator read operations, used during display refresh;

Figure 5 is a timing diagram showing character generator write operations, used during character generator updating; and

Figure 6 shows a maximum new scan counter system.

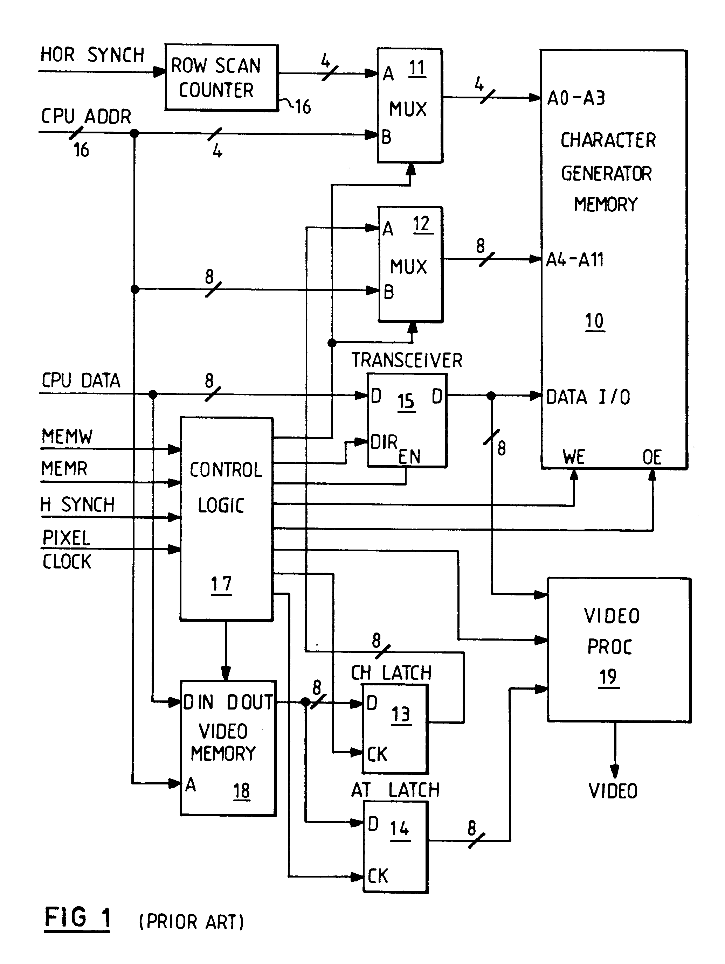

Figure 1 is a block diagram of a prior art character generator display adapter. It comprises a character generator memory 10 for storing font data. This memory is addressed by signals from a first multiplexer 11 and a second multiplexer 12, which provide, respectively address bits A0 through A3 and A4 through A11 to memory 10. Multiplexer 11 receives four bits from row scan counter 16 at its A input and four bits of an address from a CPU at its B input. Multiplexer 12 receives eight bits from a character latch 13 at it's A input and eight CPU data bits at its B input. Multiplexer 11 and 12 provide the A0-A3 and A4 to A11 address bits of a character generator memory 10 respectively. This memory is of the dynamic random access (DRAM) type. Data passes between memory 10 and the CPU through a bidirectional transciever 15, and also from the memory to a video processor 19. A video store 18 is coupled to the CPU address and data busses to receive data from the CPU at addresses defined thereby to provide a layout of characters to be displayed in positions in the video store corresponding to their screen positions. Each character byte (in ASSCII code) is accompanied by an attribute byte. Control logic 17, which may be, for example, a CRT controller of the type MC6845 produced by Motorola Corp. This control logic (which now, physically incorporate row scan counter 16) controls the operation of multiplexers 11 and 12, transciever 15, memories 18 and 10, latches 13 and 14 and video processor 19. It receives memory write (MEMW), memory read (MEMR) and display picture element clock (PIXEL CLOCK) signals from the CPU to effect this control.

To simplify this, and the subsequent, section of the description, we will assume that display characters are defined on the display screen as $8 \times 8$ character boxes, or in other words, each character is defined by eight picture elements on each of eight scan lines of the display. Initially character data is loaded into the character generator memory. This data is generated from the CPU either from its read-only memory or from character sets combined on a diskette file. This data is entered byte-by-byte through transciever 15 with, for the $8 \times 8$ character box, the lowest three address bits defining the respective scanning line data, and the higher address bits to individual characters. For this operation, control logic 17 issues a write enable (WE) signal for memory 10, and provides control signals to multiplexers 11 and 12 so that they pass their B inputs through to the memory 10 address inputs.

With character data in memory 10, the system can now refresh the raster display. Video memory 18 is loaded with character and attribute data from the CPU. This data is positioned within the memory such that on reception of successive addresses, character and attribute data relating to successive characters in a character line to be displayed are read out. As is well known, these successive addresses are generated by control logic 17. The character data is fed to a character latch 13, and immediately thereafter the associated attribute data is fed to an attribute latch 14. At this time the character data from latch 13 addresses store 10 through multiplexer 12 in conjunction with the row scan counter output through multiplexer 11. Accordingly, the resultant character font data from store 10 and the attribute data from latch 14 are applied to a video processing circuit 19 from which the video signals are derived.

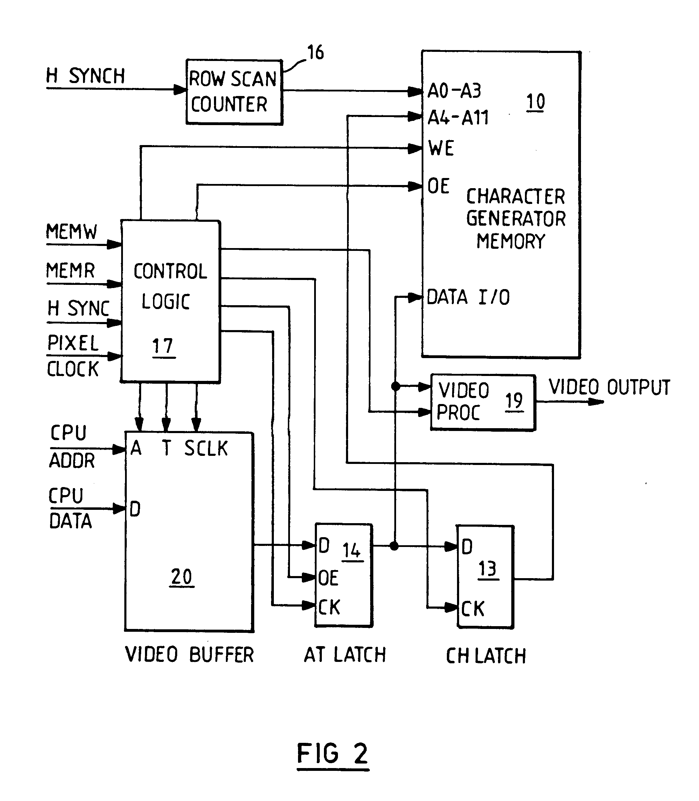

Figure 2 is a diagram of a raster scan display system embodying the invention. It will be seen immediately that this employs considerably fewer components than the Figure 1 system. In the Figure 2 system, the row scan counter, control logic, attribute and character latches, character generator memory and video processing circuit are the same as those employed in the Figure 1 system. As can be seen from the drawing, the multiplexers and trancievers are not used. Instead of the video memory of Figure 1, a different type of memory is used in the Figure 2 system this, to distinguish the two, is termed a video buffer herein. In addition, the attribute latch 14 and character latch 13 are now connected serially rather than in parallel as in the Figure 1 system.

Video buffer 20 is a dual font dynamic random access memory system. An example of such a memory is the micro PD 41264 marketed by NEC Electronics Inc. This memory is a $64K \times 4$ bit dynamic RAM with a $256 \times 4$ bit serial shift register output. Thus, one port is a random access port, the other, the serial read port. By using a pair of these memories, we provide a 64KB dynamic RAM with a 256 byte serial output system. This memory is well known, but in general terms it comprises a normal dynamic RAM with address means and data input/output means together with means for reading data from the RAM to the 256 position shift register. In order to achieve the data transfer to the shift register, the address means first uses eight row address bits to select a row in the dynamic RAM, and then eight column address bits are used to select one of 256 serial decoders which corresponds to the start location of the data to be read to the shift register. This data is then read to the shift in one cycle. Thereafter, it is read four-bit by four-bit (or in the present case with two memories, byte by byte) from the shift register under control of a shift clock signal. From this, it is clear that such a memory system has great utility in a raster display system. For each line of the raster, the data can be first applied to the shift register, and then transferred to the video circuits while the dynamic RAM section is being updated. For this to buffer, all that has to be achieved is to effect the transfer to the shift register during retrace times of the display raster. Note that most display systems display not more than eighty characters per row, so that, with each character data on a line comprising a character data byte (to address the character generator memory) and an attribute data byte (defining the colour or other attribute of the character), only 160 bytes are required from the shift register. This, however, creates no problem providing the addressing for transfer to the shift register is arranged correctly.

As is normal, the CPU addresses video buffer 20 for data updating, and control logic 17 addresses the buffer for raster display refresh functions. The only significant difference here between the present and prior systems is that the control logic is arranged, for example by programming, to select only the first video buffer address for the data for each row rather than all the addresses corresponding to the respective characters in that row.

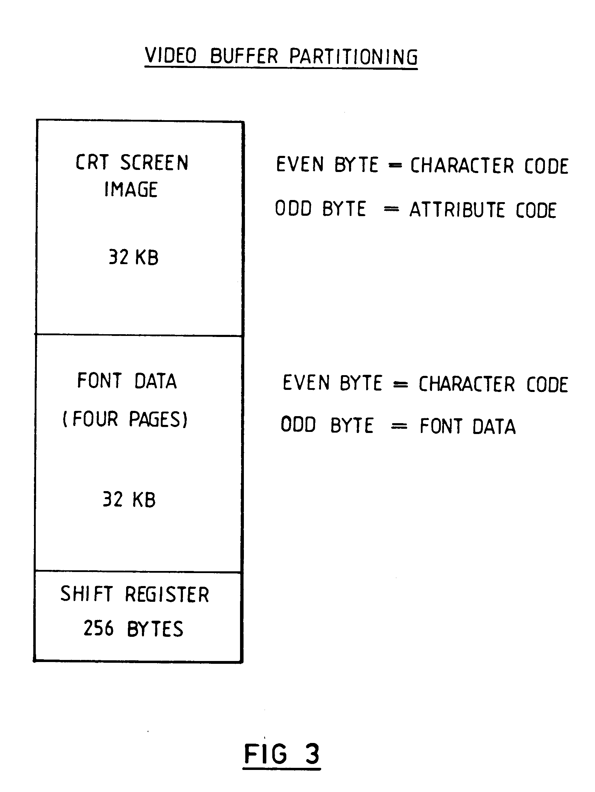

Turning now to Figure 3, this shows the partitioning of data in video buffer 20 (Figure 2). It will be recalled that the dynamic RAM section of the video buffer comprises 64KB. These are partitioned, as shown in Figure 3, into a CRT screen image position of 32KB. This partition is employed to define the image to be displayed on the screen. It defines 16K characters, with each even byte comprising character code (used to address the character generator) and the adjacent odd byte comprising attribute code. This amount of character data is sufficient for approximately eight 80 × 25 row character screens. This allows for paging up and down or rolling without updating the buffer.

The second partition of the video buffer also contains character code for addressing the character generator in even bytes. In this partition, however, each corresponding odd byte comprises font data for writing into the character generator. As indicated above, for simplicity we have stated that 8 × 8 picture element character boxes will be considered here. Each displayed character, therefore, is defined by eight bytes of font data, one for each raster line. With this character format, each character set of 256 characters requires 2K bytes of font data. Accordingly, each character set requires a total of 4K bytes in the second partition, so four pages, each comprising a full character set require 16K bytes. In order to allow for character box expansion to 8 × 16 picture elements, thereby requiring 16 bytes of font data for each character, only four pages of character/font data are defined in the second partition.

Lastly, at the bottom of the Figure 3, diagram the 256 byte shift register is shown. While this may not strictly be regarded as a memory partition, it illustrates the fact that 256 bytes of data from either of the upper partitions can be transferred into it.

Referring back to Figure 2, the operation of the system in its various modes will now be described. Firstly, whenever the data is being shifted out of the shift register in video buffer 20, the dynamic RAM section of this buffer can be modified by CPU data at addresses defined by CPU address data. During each horizontal retrace time (except during vertical blanking) of the raster scan in the display device, data is transferred from a block in the CRT screen image partition corresponding to the data for the immediately following scan line. As indicated above, though 256 bytes are transferred, only 160 bytes are required. Accordingly, the addresses defining the data for respective lines are, for different character rows, 160 locations apart. It should, however, be noted that the same data is extracted (for an 8 × 8 character box) eight times for each character row. This provides for the total of eight font bytes for each character to be read from the character memory using different A0-A3 combinations from row scan counter 16 to supplement the character generator memory addresses for each respective scanning line. Control logic 17 provides the video buffer row starting addresses, the dynamic RAM to shift register transfer control signals T, and the shift clock signals S CLK to shift the shift register. Each output byte from the shift register is applied to attribute latch 14. Each even byte (character code, see Figure 3) is then clocked into character latch 13 while the following odd byte (attribute code, see Figure 3) is applied to latch 14. For the next clock cycle, the latch 14 output is disabled (by an uneven output enable level applied to the OE input of this latch), and the byte in latch 13 is applied to address input A4-A11 of memory 10 to address this memory in conjunction with the row scan A0-A3 inputs. At this time, control logic 17 applies an output enable signal to the OE input of memory 10, so that a byte of font data is read from the location defined by the input address. The byte in that location is directed from the data I/O terminals of memory 10 together with the attribute byte held in latch 14, which is now enabled and clocked to deliver that byte to the video processing circuits 19. Circuits 19 combines the attribute and font data to produce data for eight picture elements of the raster scan.

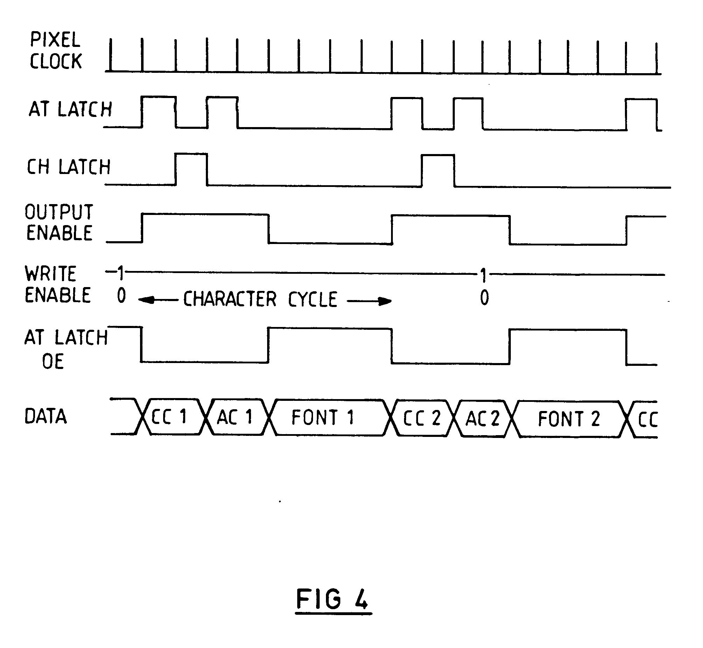

Figure 4 shows the timing of this operation in which the character generator is read to develop the display refresh data. This diagram shows at the top line, the pixel clock applied to the control logic and then the attribute latch 14 and character latch 13 clock timing on the next two lines. These clocks are generated in response to the pixel clock. The output enable signal to the OE input of memory 10 (which is active low), causes an output operation from memory 10 only when the attribute and character latches are not clocked. The write enable (WE) input to memory 10 remains inactive (high) for this complete operation, and the attribute latch output enable input is active (low) over a period during which the attribute and character latch clock signals are generated. The result is that during a character cycle, the character data is applied to the character latch, then attribute data is applied thereto and then there is no clocking of these latches as font data is read from the character memory, as shown in the data time.

In the final mode of operation, font data is written in the character generator memory from the video buffer. This operation takes place during the display raster vertical blanking interval to prevent interference with a display on the screen. The data to be transferred is held in the lower partition of memory 20 (see Figure 3) and comprises character data followed by font data in respective even and odd locations. The layout of this data defines the subsequent layout of data in the character generator memory 10. The font data relating to the first scan line of the first 128 characters of a character set is placed in successive odd locations in the store for the first stored character set this sequence starts at the first location in the font data partition. Each corresponding even location contains the related character code. The following 128 locations contain the font data for next scan line of these characters, and so on until all the scan lines of the font 128 characters are defined. Then the data for the next 128 characters is placed into the next area of buffer 20 in the same way. For this operation we can use th whole 256 stages of the shift register in buffer 20. For the font data relating to the first scan line of the first 128 characters, the corresponding even 128 locations containing character data and corresponding odd 128 locations containing font data are transferred to the shift register. This data is then clocked, byte-by-byte into attribute latch 14. The first byte, a character byte is fed to this latch and then into the character latch 13 on transfer of the first font byte into latch 14. Control logic 17 energises the write enable (WE) input of character generator memory 10 and the character output of latch 13, in conjunction with a row scan output, addresses memory 10 to write the data from the attribute latch into the addressed location. This operation continues for the remainder of the data in the shift register and the cycle continues for the remaining scan row data for the first 128 characters. The operation is then repeated for the next 128 characters in the 256 character set. This whole operation takes place within a single vertical blanking time of the display raster scan.

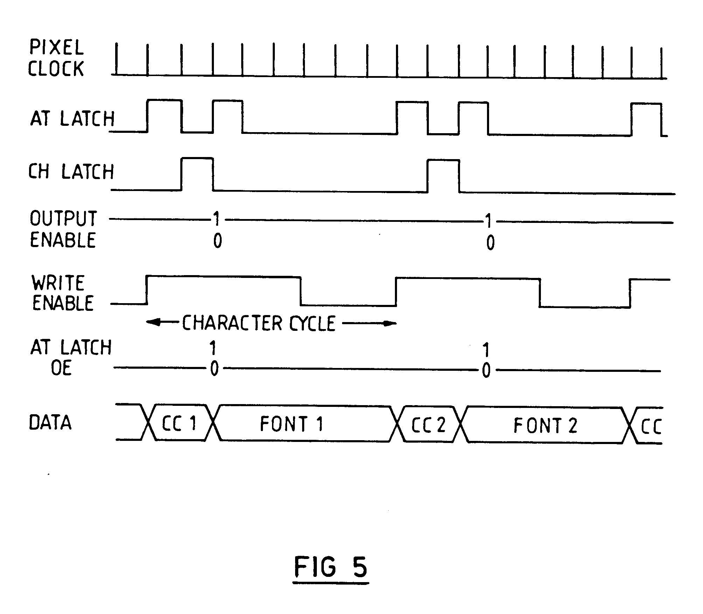

Figure 5 shows the timing of this operation to write font data into the character generator memory from the video buffer. Here, the pixel clock, attribute latch clock and character latch clock signals are all the same as in Figure 4. The output enable signal from control logic 17 to the OE input of memory 10 remains high (inactive) preventing read-out from memory 10. The write enable signal applied to the WE input of memory 10 starts high and then goes low (active) during a character cycle. The attribute latch 14 output enable (OE) input remains low (active) to maintain this latch in an enabled condition. As can be seen in the data line, during each character cycle (remember that this all takes place only during vertical blanking intervals in the raster display) the character code is registered followed by the corresponding font data. This font data remains in the attribute latch while the write enable signal goes active in the last position of the character cycle so that this data is written into the location defined by the character data.

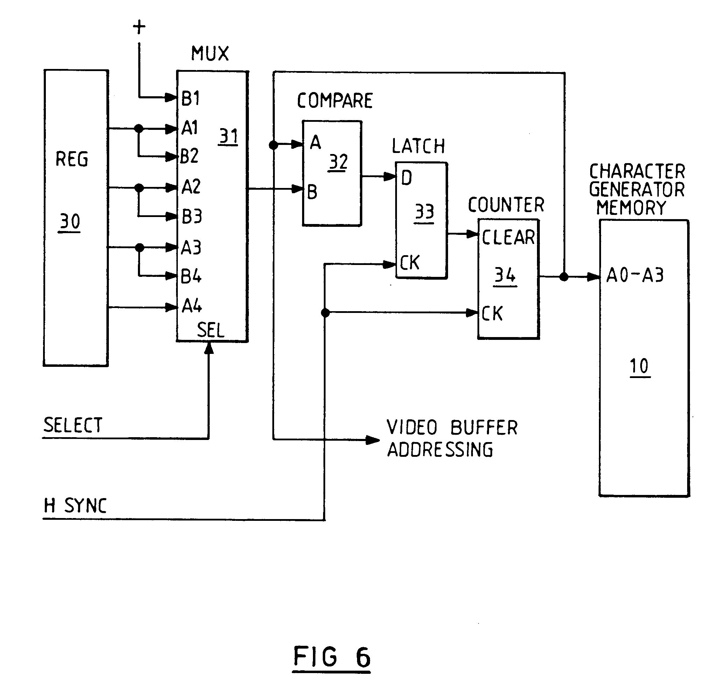

As has been mentioned above, while a system employing an 8 × 8 character box has been described, the font data partition of the video buffer is sufficiently large to store four pages of font data in an 8 × 16 character box form. This means that each character is represented by sixteen bytes of font data. Following this, the row scan counter system must now be adapted to modify the A0-A3 address inputs to memory 10 so that they increment up to sixteen. Figure 6 shows a row scan counter circuit switchable between eight and sixteen incremental steps.

In Figure 6 there is shown a maximum row scan register having four stages coupled to inputs of a multiplexer 31. The four stages go from the lowest order at the top to the highest order at the bottom. The multiplexer, in response to CPU signals on a select line switches its A or its B input to four output lines which are applied as one input to a compare circuit 32. The output of compare circuit is applied to the data input of a latch 33 which also receives the raster scan horizontal synch signals at its clock input. The latch output is applied to a clear input of a counter 34 which is also clocked by the horizontal synch signals. The output of counter 34 generates the A0-A3 address signals for the character generator store 10 (Figures 1 and 2). Additionally, the counter 34 outputs are fed back to compare circuit 32 and are used to define specific scan lines in a character row for the video buffer addressing.

As addresses A0-A3 start at zero, the eighth address in this set is seven, so this number is stored in register 30. With the select input set to select the A inputs, this number is fed unchanged to the inputs of compare circuit 32. With the select input set to select the B inputs, the lowest order digit is set to "1" by the positive input to B1 and the next three digits correspond to the three lower binary digits of the number seven in the register. Consequently each output from the multiplexer is a binary "1" corresponding to decimal 15. This, when counting zero as the first A0-A3 address, provides a count of sixteen to the address inputs.

Assuming counter 34 is cleared, it is incremented by one at each horizontal synch input to provide successive incremental counts from zero upwards to the A0-A3 character generator memory inputs. Each of these counts is compared with the multiplexer 31 output by comparator 32. Upon detection of equality, comparator 32 applies a "1" to the data input of latch 33, which, on the next horizontal synch signal, clocks this input to counter 34 to reset the counter. Accordingly, counter 34 is incremented by horizontal synch inputs until it reaches the number (either 8 or 16) provided by multiplexer 31, and is then reset to zero on the next following horizontal synch. input.

**Claims**

1. A raster scan display system including a random access memory character generator (10) and a dual port random access memory video buffer (20) including memory partitions, output shift register means, and means for transferring data groups from the partitions to the shift register means, characterised in that said memory partitions including a first partition for storing, in consecutive locations, first data pairs, each comprising character data and display font data, said system including control logic means (17) including means for controlling said means for transferring to transfer a plurality of said first data pairs to the shift register means, means for clocking the shift register means to output said first pairs of data, and means (13, 14) for directing the character data of a first pair to address the character generator for writing the font data of the first pair into the addressed location.

2. A raster scan display system according to claim 1, including first and second latch means, the first latch means being coupled to the shift register output and having an output coupled to the data input of said character generator and to the input of said second latch means, said second latch means having an output coupled to an address input of said character generator.

3. A raster scan display system according to claim 1 or claim 2, in which said shift register is sized to hold data corresponding to character and font data for a full raster scan line, said plurality of first data pairs comprises character and font data for at least one full display scan line, and said means for controlling is responsive to raster scan horizontal retrace means for effecting said transfer during horizontal retrace of the display raster scan.

4. A raster scan display system according to any of claims 1 to 3, including row scan means (16) coupled to a further address input of the character generator corresponding to the lowest ordered address digits to provide different address series for writing font data relating to different raster scan lines of display characters into the character generator.

5. A raster scan display system according to claim 4, in which said row scan counter means comprises means (30) for producing maximum row scan data, a compare circuit (32) for receiving said maximum row scan data at a first input, a latch (33) having a data input coupled to the output of said compare circuit and a clock input coupled to receive raster scan horizontal synchronising signals, a counter (34) having a clear input coupled to the output of said latch, a count input coupled to receive said horizontal synchronising signals, and an output coupled to a second input of said compare circuit and to said further address input of said character generator.

6. A raster scan display system according to claim 5, in which said means for producing maximum row scan data comprises a maximum row scan register having output coupled to a multiplexor (31) selectable between a first condition to provide a first output corresponding to the content of said maximum row scan register and a second condition to provide a second output having a value double the value of the content of the maximum row scan register.

7. A raster scan display system according to any of the previous claims, in which said video buffer includes a second partition for storing, in consecutive locations, second data pairs, each comprising character data and attribute data, said system includes video processing means (19) responsive to font data and attribute data for generating video data for the display, and said control logic means includes means for controlling said means for transferring to transfer a plurality of said second data pairs to the shift register means for clocking by said means for clocking to output said second data pairs, and for controlling said means for directing to direct the character data of a second data pair to address the character generator for retrieving font data from the addressed location, and for directing the retrieved font data and the attribute data of the second pair to said video processing means for generating corresponding video display data.

8. A raster scan display system including a random access memory character generator and a dual port random access memory video buffer including first and second memory partitions, said first memory partition storing character data and attribute data at consecutive location pairs therein, said second memory partition storing character data and font data at consecutive locations pairs therein, means for transferring data from said first memory partition to the second of the dual ports during a horizontal retrace of the display raster for subsequent accessing of the character generator by the character data and combination of font data from accessed locations with said attribute data to generate video data for the display line following the retrace, and for transferring data from the second memory partition to said second of the ports during vertical blanking of the display raster for subsequent accessing of the character generator to write font data therein.

9. A raster scan display system including a random access memory character generator and a dual port random access memory video buffer including a first memory partition for storing character and attribute data, and a second memory partition for storing character and font data, means for updating the video buffer through the first of the dual ports, and means for refreshing the display by means of data from the first memory partition and for updating the character generator by means of data from the second memory partition through the second of the dual ports.

**Revendications**

1. Système d'affichage à balayage à trame comportant un générateur de caractères à mémoire à accès direct (10) et une mémoire tampon vidéo à mémoire à accès direct à double accès (20) comportant des segmentations de mémoire, un moyen de registre à décalage de sortie et un moyen pour transférer des groupes de données provenant des segmentations du moyen de registre à décalage, caractérisé en ce que lesdites segmentations de mémoire comportent une première segmentation pour mémoriser, dans des emplacements consécutifs, des premières paires de données, chacun comprenant une donnée de caractère et une donnée de jeu de caractères d'affichage, en ce que ledit système comporte un moyen de logique de commande (17) comportant un moyen pour commander ledit moyen afin de transférer une pluralité desdites premières paires de données vers le moyen de registre à décalage, un moyen pour cadencer le moyen de registre à décalage afin de sortir lesdites premières paires de données et un moyen (13, 14) pour diriger la donnée de caractère d'une première paire afin d'adresser le générateur de caractères pour écrire la donnée de jeu de caractères de la première paire dans l'emplacement adressé.

2. Système d'affichage à balayage à trame selon la revendication 1, comportant des premier et second moyens de bascule, le premier moyen de bascule étant couplé à la sortie du registre à décalage et comportant une sortie couplée à l'entrée de données dudit générateur de caractères et à l'entrée dudit second moyen de bascule, ledit second moyen de bascule comportant une sortie couplée à une entrée d'adresse dudit générateur de caractères.

3. Système d'affichage à balayage à trame selon la revendication 1 ou la revendication 2, dans lequel ledit registre à décalage est dimensionné pour contenir des données correspondant aux données de caractère et de jeu de caractères pour une ligne de balayage à trame totale, ladite pluralité de premières paires de données comprenant des données de caractère et de jeu de caractères pour au moins une ligne de balayage d'affichage totale et ledit moyen pour commander étant sensible au moyen de retour de spot horizontal de balayage de trame pour effectuer ledit transfert pendant le retour du spot horizontal du balayage de trame de l'affichage.

4. Système d'affichage à balayage de trame selon l'une quelconque des revendications 1 à 3, comportant un moyen de balayage de rangée (16) couplé à une autre entrée d'adresse du générateur de caractères correspondant au chiffre d'adresse de poids le plus faible pour délivrer des séries d'adresses afin d'écrire des données de jeu de caractères se rapportant aux lignes de balayage de trame différentes des caractères d'affichage dans le générateur de caractères.

5. Système d'affichage à balayage de trame selon la revendication 4, dans lequel ledit moyen de compteur de balayage de rangée comprend un moyen (30) pour produire des données maximales de balayage de rangée, un circuit de comparaison (32) pour recevoir lesdites données maximales de balayage de rangée à une première entrée, une bascule (33) comportant une entrée de données couplée à la sortie dudit circuit de comparaison et une entrée d'horloge couplée pour recevoir les signaux de synchronisation horizontale de balayage de trame, un compteur (34) ayant une entrée de remise à zéro couplée à la sortie de ladite bascule, une entrée de comptage couplée pour recevoir lesdits signaux de synchronisation horizontale et une sortie couplée à une seconde entrée dudit circuit de comparaison et à ladite autre entrée d'adresse dudit générateur de caractères.

6. Système d'affichage à balayage de trame selon la revendication 5, dans lequel ledit moyen pour produire les données maximales de balayage de rangée comprend un registre maximal de balayage de rangée comportant une sortie couplée à un multiplexeur (31) qui peut être sélectionné entre un premier état pour délivrer une première sortie correspondant au contenu dudit registre maximal de balayage de rangée et un second état pour délivrer une seconde sortie ayant une valeur double de la valeur du contenu du registre maximal de balayage de rangée.

7. Système d'affichage à balayage de trame selon l'une quelconque des revendications précédentes, dans lequel la mémoire tampon vidéo comporte une seconde segmentation pour mémoriser, dans des emplacements consécutifs, des secondes paires de données, chacune comprenant une donnée de caractère et une donnée d'attribut, dans lequel ledit système comporte un moyen de traitement vidéo (19) sensible à la donnée de jeu de caractères et à la donnée d'attribut pour produire des données vidéo pour l'affichage, et dans lequel ledit moyen de logique de commande comporte un moyen pour commander ledit moyen afin de transférer une pluralité desdites secondes paires de données vers le moyen de registre à décalage par ledit moyen pour cadencer la sortie desdites seconde paires de données et pour commander ledit moyen afin de diriger les données de caractère d'une seconde paire de données pour adresser le générateur de caractères dans le but de rechercher les données de jeu de caractères à partir des emplacements adressés et de diriger les données de jeu de caractères retrouvées et les données d'attribut de la seconde paire vers ledit moyen de traitement vidéo afin de produire les données d'affichage vidéo correspondantes.

8. Système d'affichage à balayage de trame comportant un générateur de caractères à mémoire à accès direct et une mémoire tampon vidéo à mémoire à accès direct à double accès comportant des première et seconde parties de segmentation de mémoire, ladite première segmentation de mémoire mémorisant des données de caractère et des données d'attribut à des paires d'emplacements consécutifs dans celle-ci, ladite seconde segmentation de mémoire mémorisant des données de caractère et des données de jeu de caractères à des paires d'emplacements consécutifs dans celle-ci, un moyen pour transférer la donnée depuis ladite première segmentation de mémoire vers le second des doubles accès pendant un retour de spot horizontal de la trame d'affichage pour accès ultérieur du générateur de caractères par la donnée de caractère et une combinaison d'une donnée de jeu de caractères depuis l'emplacement accédé avec ladite donnée d'attribut afin de produire la donnée vidéo pour la ligne d'affichage suivant le retour de spot, afin de transférer la donnée depuis la seconde segmentation de mémoire au second accès des accès pendant la suppression verticale de la trame de balayage pour accès ultérieur du générateur de caractères dans le but d'écrire les données de jeu de caractères dans celui-ci.

9. Système d'affichage à balayage de trame comportant un générateur de caractères à mémoire à accès direct et une mémoire tampon vidéo à mémoire à accès direct à double accès comportant une première segmentation de mémoire pour mémoriser des données de caractère et d'attribut et une seconde segmentation de mémoire pour mémoriser des données de caractère et de jeu de caractères, un moyen pour actualiser la mémoire tampon vidéo par l'intermédiaire du premier accès des doubles accès et un moyen pour rafraîchir l'affichage au moyen de données depuis la première segmentation de mémoire et pour actualiser le générateur de caractères au moyen de données provenant de la seconde segmentation de mémoire par l'intermédiaire du second accès des doubles accès.

**Patentansprüche**

1. System für die Anzeige mit Rasterabtastung, das einen Speicher-Zeichengenerator (10) mit wahlfreiem Zugriff und einen Dualanschlußspeicher-Videopuffer (20) mit wahlfreiem Zugriff aufweist, der Speicherpartitionen, ein Ausgangsschieberegistermittel und Mittel zum Übertragen von Datengruppen aus den Partitionen zu dem Schieberegistermittel besitzt, dadurch gekennzeichnet, daß die Speicherpartitionen eine erste Partition aufweisen, um in aufeinanderfolgenden Stellen erste Datenpaare zu speichern, wobei jedes Zeichendaten und Anzeigeschriftartdaten enthält und das System aufweist:

Steuerlogikmittel (17) mit einem Mittel zum Steuern der Mittel zum Übertragen, um eine Mehrzahl der ersten Datenpaare zu dem Schieberregistermittel zu übertragen, Mittel zur Taktgabe für das Schieberegistermittel, um die ersten Datenpaare auszugeben und Mittel (13, 14) zum Lenken der Zeichendaten eines ersten Paars, um den Zeichengenerator zum Schreiben der Schriftartdaten des ersten Paars in die adressierte Stelle zu adressieren.

2. System für eine Anzeige mit Rasterabtastung nach Anspruch 1, das erste und zweite Latch-Mittel aufweist, wobei die ersten Latch-Mittel mit dem Schieberegisterausgang verbunden sind und einen Ausgang aufweisen, der mit dem Dateneingang des Zeichengenerators und mit dem Eingang der zweiten Latch-Mittel verbunden ist und die zweiten Latch-Mittel einen Ausgang aufweisen, der mit einem Adreßeingang des Zeichengenerators verbunden ist.

3. System für eine Anzeige mit Rasterabtastung nach Anspruch 1 oder Anspruch 2, bei welchem das Schieberegister ausgelegt ist, um Daten aufzunehmen, die Zeichen- und Schriftartdaten für eine ganze Rasterabtastung-Zeile entsprechen, wobei die Mehrzahl erster Datenpaare Zeichen- und Schriftartdaten für zumindest eine ganze Anzeigeabtastung-Zeile aufweist und das Mittel zum Steuern auf die Horizontalrücklaufmittel für eine Rasterabtastung anspricht, um während eines Horizontalrücklaufs der Rasterabtastung für eine Anzeige die Übertragung zu bewirken.

4. System für eine Anzeige mit Rasterabtastung nach irgendeinem der Ansprüche 1 bis 3, mit Zeilenabtastmitteln (16), die mit einem weiteren Adreßeingang des Zeichengenerators verbunden sind, welcher den niedrigsten geordneten Adreßstellen entspricht, um verschiedene Adreßreihen zum Schreiben von Schriftartdaten bezüglich verschiedener Rasterabtastung-Zeilen von Anzeigezeichen in den Zeichengenerator zu liefern.

5. System für eine Anzeige mit Rasterabtastung nach Anspruch 4, bei welchem das Zählermittel für eine Zeilenabtastung aufweist: Mittel (30) zum Erzeugen von Daten für maximale Zeilenabtastung, eine Vergleicherschaltung (32) zum Empfangen der Daten für maximale Zeilenabtastung an einem ersten Eingang, ein Latch (33) mit einem Dateneingang, der mit dem Ausgang der Vergleicherschaltung verbunden ist und mit einem Taktgebereingang, der angeschaltet ist, um Zeilensynchrisignale für eine Rasterabtastung zu empfangen, einen Zähler (34) mit einem Löscheingang, der mit dem Ausgang des Latch verbunden ist, mit einem Zählereingang, der angeschaltet ist, um die Zeilensynchronisiersignale zu empfangen und mit einem Ausgang, der mit einem zweiten Eingang der Vergleicherschaltung und dem weiteren Adreßeingang des Zeichengenerators verbunden ist.

6. System für eine Anzeige mit Rasterabtastung nach Anspruch 5, bei welchem das Mittel zum Erzeugen von Daten für maximale Zeilenabtastung ein Register für maximale Zeilenabtastung mit einem Ausgang aufweist, der mit einem Multiplexer (31) verbunden ist, der zwischen einem ersten Zustand zum Liefern eines ersten, dem Inhalt des Registers für maximale Zeilenabtastung entsprechenden Ausgangs und einem zweiten Zustand zum Liefern eines zweiten Ausgangs gewählt werden kann, dessen Wert ein Zweifaches des Werts des Inhalts des Registers für maximale Zeilenabtastung beträgt.

7. System für eine Anzeige mit Rasterabtastung nach irgendeinem der vorgehenden Ansprüche, bei welchem der Videopuffer eine zweite Partition aufweist, um in aufeinanderfolgenden Stellen zweite Datenpaare zu speichern, wobei jedes Zeichendaten und Attributdaten aufweist und das System Videoverarbeitungsmittel (19) aufweist, die auf Schriftartdaten und Attributdaten ansprechen, um Videodaten für die Anzeige zu erzeugen, und das Steuerlogikmittel aufweist:

Mittel zum Steuern der Mittel zum Übertragen, um eine Mehrzahl der zweiten Datenpaare zu dem Schieberegistermittel zur Taktgabe durch die Mittel zur Taktgabe zu übertragen, um die zweiten Datenpaare auszugeben und zum Steuern der Mittel zum Lenken, damit die Zeichendaten eines zweiten Datenpaares zum Adressieren des Zeichengenerators gelenkt werden, um Zeichenartdaten aus der adressierten Stelle abzurufen und um die abgerufenen Zeichenartdaten und die Attributdaten des zweiten Paares zu den Videoverarbeitungsmitteln zu lenken, um entsprechende Videoanzeigedaten zu erzeugen.

8. System für eine Anzeige mit Rasterabtastung, das einen Speicher-Zeichengenerator mit wahlfreiem Zugriff und einen Dualanschlußspeicher-Videopuffer mit wahlfreiem Zugriff aufweist, der besitzt: erste und zweite Speicherpartitionen, wobei die erste Speicherpartition Zeichendaten und Attributdaten bei aufeinanderfolgenden Stellenpaaren darin speichert und die zweite Speicherpartition Zeichendaten und Schriftartdaten bei aufeinanderfolgenden Stellenpaaren darin speichert, Mittel zum Übertragen von Daten aus der ersten Speicherpartition zu dem zweiten der Dualanschlüsse während eines Zeilenrücklaufs des Anzeigerasters, um nachfolgend auf den Zeichengenerator durch die Zeichendaten und eine Kombination von Schriftartdaten aus Stellen, auf die zugegriffen wurde, mit den Attributdaten zuzugreifen, um Videodaten für die dem Rücklauf folgende Anzeigezeile zu erzeugen und zum Übertragen von Daten aus der zweiten Speicherpartition zu dem zweiten der Anschlüsse während einer Vertikalunterdrückung des Anzeigerasters, um nachfolgend auf den Zeichengenerator zuzugreifen, damit darin Schriftartdaten geschrieben werden.

9. System für eine Anzeige mit Rasterabtastung, das einen Speicher-Zeichengenerator mit wahlfreiem Zugriff und einen Dualanschlußspeicher-Videopuffer mit wahlfreiem Zugriff aufweist, das besitzt: eine erste Speicherpartition zum Speichern von Zeichen- und Attributdaten und eine zweite Speicherpartition zum Speichern von Zeichen- und Schriftartdaten, Mittel zum Aktualisieren des Videopuffers durch den ersten der Dualanschlüsse und Mittel zum Auffrischen der Anzeige mittels Daten aus der ersten Speicherpartition und zum Aktualisieren des Zeichengenerators mittels Daten aus der zweiten Speicherpartition durch den zweiten der Dualanschlüsse.

FIG 1 (PRIOR ART)

FIG 2

## VIDEO  BUFFER  PARTITIONING

| | |
|---|---|
| CRT SCREEN IMAGE<br><br>32 KB | EVEN BYTE = CHARACTER CODE<br><br>ODD BYTE  = ATTRIBUTE CODE |
| FONT DATA<br>(FOUR PAGES)<br><br>32 KB | EVEN BYTE = CHARACTER CODE<br><br>ODD BYTE  = FONT DATA |
| SHIFT REGISTER<br>256 BYTES | |

## FIG 3

**FIG 4**

FIG 5

FIG 6